# EUROPÄISCHE PATENTSCHRIFT

(11) **EP 2 565 871 B1**
(45) Veröffentlichungstag und Bekanntmachung des Hinweises auf die Patenterteilung: **18.03.2015**
(21) Anmeldenummer: 12005201.4
(22) Anmeldetag: 14.07.2012
(51) Int. Cl.: G10K 11/172, B60R 13/08, F02B 77/13

(54) **Akustisch bedämpftes Bauteil**
Acoustically dampened component
Elément de construction avec insonorisation

(30) Priorität: 01.09.2011 DE 102011112313
(43) Veröffentlichungstag der Anmeldung: 06.03.2013
(73) Patentinhaber: MAN Truck & Bus AG, 80995 München (DE)
(72) Erfinder: Vogel, Claus, 91126 Schwabach (DE)

(56) Entgegenhaltungen:
- EP-A2- 1 474 314
- JP-A- 2000 330 571
- US-A- 3 773 141
- US-A1- 2003 006 090
- US-B2- 7 631 727

## Beschreibung

Die Erfindung betrifft eine akustisch bedämpftes Bauteil vorzugsweise für ein Fahrzeug, einen Motor, ein Getriebe oder ein Fahrzeugverkleidungsteil umfassend einen flächigen Grundkörper der auf zumindest einer Seite wenigstens bereichsweise mit einer Rippenstruktur versehen ist wobei die Rippen der Rippenstruktur Kammern bilden und die Kammern auf zumindest einem Bereich des Bauteils unregelmäßig angeordnet sind.

Das US Patent US 3,773,141 lehrt ein Wandelement das mit einer Gitterstruktur versehen ist und bei geringem Mehrbedarf an Material ein hochsteifes und stark lärmreduziertes Bauteil bildet. Das Wandelement ist hierbei durch die Gitterstruktur besonders steif aufgebaut wobei das Verhältnis von Rippenhöhe plus Grundkörperdicke zu Grundkörperdicke größer 4 und gleichzeitig das Verhältnis von Kammerinnenseitelänge zu der Rippendicke zwischen 4 und 14 beträgt. US 3,773,141 zielt darauf ab, die Steifigkeit zu erhöhen und damit das Resonanzamplitudenverhältnis des Bauteils durch die Gestaltung der Verrippung zu beeinflussen. Durch die Strategie der Bauteilversteifung lässt sich eine Reduzierung der Geräuschemissionen lediglich eingeschränkt erreichen.

Der Erfindung liegt die Aufgabe zugrunde, ein akustisch bedämpftes Bauteil vorzugsweise für ein Fahrzeug, einen Motor, ein Getriebe oder ein Fahrzeugverkleidungsteil mit dem Merkmal des Oberbegriffs des Anspruches 1 derart weiterzubilden, dass die Geräuschemission des mit dem akustisch bedämpften Bauteil versehenen Systems signifikant verändert und/oder reduziert wird. Ferner ist es Aufgabe der Erfindung neben einer gezielten Veränderung der Geräuschcharakteristik einen erhöhten mechanischen Schutz des akustisch bedämpften Bauteils zu erreichen.

Diese Aufgabe wird durch die Merkmale des Anspruchs 1 gelöst. Vorteilhafte Weiterbildungen der Erfindung ergeben sich aus den Unteransprüchen 2 -15.

Als Kern der Erfindung wird es angesehen, dass das Bauteil eine Eigenfrequenz von 200 - 1000 Hz aufweist und die Kammern derart unregelmäßig ausgebildet sind, dass zumindest bereichsweise Kammern des Bauteils gegenüber der an diesen benachbarten Kammern eine derart unterschiedliche Dimensionierung und/oder Geometrie aufweisen, dass ausgehend von den Kammern abgestrahlter Luftschall im Nahfeld gegenseitig reduzierbar und/oder auslöschbar ist wobei eine Antwort auf eine transiente Erregung wenigstens zweier Teilflächen der mit den Kammern versehenen Oberfläche des Bauteils eine Korrelation von 0,5 bis.0,85, vorzugsweise 0,60 bis 0,70 aufweist.

Es wurde erkannt, dass die Rippen als Begrenzung von Teilflächen dienen können, die eine unregelmäßige Strukturen aufweisen und dabei, aufgrund von der stochastischen Verteilung akustischer Dipolquellen, eine gegenseitige Reduzierung oder Auslöschung von abgestrahltem Luftschall im Nahfeld bewirken und damit in einem Frequenzband keine Schallabstrahlung zulassen (Bandsperre). Hierzu ist es vorteilhaft, wenn das Bauteil trotz der Verrippung eine definierte Nachgiebigkeit aufweist um so Amplituden in gewünschten Frequenzbändern einzustellen um einen gewissen Mindestschalldruckpegel für diese Frequenzen zu erzeugen, vorzugsweise im tiefen Bereich.

Die definierte Mindestnachgiebigkeit des Bauteils geht aus der Forderung der Eigenfrequenz des Bauteils im Bereich von 200 - 1000 Hz hervor. Durch die unregelmäßigen Kammern die unregelmäßige Teilflächen bilden wird die Reduzierung und/oder Auslöschung des von den Teilflächen abgestrahlten Luftschalls im Nahbereich erreicht. Durch die erfindungsgemäße, unterschiedliche Dimensionierung und/oder Geometrie der Kammern wird erreicht, dass die spektrale Leistungsdichte zu den benachbarten Kammern unterschiedlich ist.

Wenn das erfindungsgemäße Bauteil mit zum Beispiel einem Hammer transient erregt wird, so wird die Antwort wenigstens zweier Teilflächen der mit den Kammern versehenen Oberfläche des Bauteils eine Korrelation von 0,50 bis 0,85, vorzugsweise 0,60 bis 0,70 aufweist. Dies kann mit einer Schallintensitätsmessung an den benachbarten Teilflächen nachgeprüft werden. Die Korrelation der beiden Zeitverläufe aus den Schallintensitätsmessungen liegt vorzugsweise in den oben genannten Schallintensitätsgrenzen. Zum Vergleich der beiden Antwortsignale wird die Kreuzkorrelation herangezogen.

In einer bevorzugten Ausführungsform ist wenigstens ein Sechstel, vorzugsweise wenigstens ein Viertel, besonders bevorzugt wenigstens die Hälfte der Kammern derart unregelmäßig ausgebildet. Durch diese Mindestabdeckung kann ein signifikant wirksamer Einfluss der Kammern auf das Schallabstrahlverhalten des Bauteils erreicht werden. Alternativ oder zusätzlich weist eine Teilfläche der mit Kammern versehenen Fläche des Bauteils keine in Geometrie und/oder Dimensionierung gleiche Kammer auf wobei die Teilfläche eine Größe von mindestens 5 % der gesamten mit Kammern versehenen Fläche des Bauteils aufweist, vorzugsweise eine Größe von mindestens 25 %, besonders bevorzugt eine Größe von mindestens 80 % der gesamten mit Kammern versehenen Fläche des Bauteils.

In einer weiteren vorteilhaften Ausführung ist die Rippenbreite einer Kammer kleiner als die Kammerbodendicke dieser Kammer, vorzugsweise entspricht die Rippenbreite zu der Kammerbodendicke dem Verhältnis 1,0:1,2 bis 1:20, besonders bevorzugt dem Verhältnis 1,0:1,8 bis 1:3. Durch diese Verhältnisse der Rippenbreite zu der Kammerbodendicke wird eine Mindestelastizität der mit Rippen versehenen Flächen des Bauteils gewährleistet. Diese Nachgiebigkeit ist notwendig um die gewünschte akustische Reaktion der Kammern zu erreichen. Dadurch, dass die Kammern definiert Schwingen, kann eine Aufhebung oder Reduktion der vom Bauteil abgestrahlten Geräusche erreicht werden.

Alternativ oder Zusätzlich ist es für die Mindestnachgiebigkeit von Vorteil, wenn die Rippenhöhe plus Kammerbodendicke im Verhältnis zu der Kammerbodendicke kleiner 4:1, vorzugsweise kleiner oder gleich 3,5:1 besonders bevorzugt kleiner oder gleich 3:1 ist. Als Kammerbodendicke kann bspw. die Grundkörperdicke herangezogen werden.

Die unterschiedliche Dimensionierung und/oder Geometrie umfasst unregelmäßig verteilte und/oder unterschiedlich große, benachbarte Kammern mit unregelmäßiger Umfangsgeometrie. Durch die verschiedenartige Gestaltung von benachbarten Kammern können sich die abgestrahlten Schallanteile der einzelnen Kammern gegeneinander aufheben, so dass die Geräuschabstrahlung des gesamten Bauteils in Summe wenigstens aller erfindungsgemäß gestalteten Kammern gleich Null ist oder sich zumindest signifikant reduziert. Vorzugsweise ist die Geometrie und/oder Dimensionierung der Kammern derart gewählt ist, dass sich die maximale Abstrahlfrequenz der benachbarten Kammern aufhebt und/oder reduziert.

Alternativ oder zusätzlich ist wenigstens eine erste Kammer derart unterschiedlich in Geometrie und/oder Dimensionierung, dass keine der zu dieser ersten Kammer benachbarten Kammern durch Skalierung, Spiegelung und/oder Drehung auf die erste Kammer erzeugbar/abbildbar ist. Hierbei umfasst die Skalierung eine Streckung oder Zerrung. Auch kann die erste Kammer nicht durch Drehung, Spiegelung oder dergleichen auf eine der benachbarten Kammern abbildbar sein. Durch eine derartige Unregelmäßigkeit wird der schallreduzierende Effekt begünstigt.

Zur einfacheren Auslegung und Fertigung der Kammern ist es von Vorteil, wenn sämtliche Rippen einer Kammer geradlinig verlaufen und wenn vorzugsweise sämtliche Rippen zu angrenzenden Rippen einer Kammer einen Winkel kleiner gleich 180° einschließen. Auch wenn eine Rippe einen Wandabschnitt für mehrere Kammern bildet und die Rippe einen geradlinigen Verlauf über mehrere Kammern hinweg aufweist, vereinfacht dies eine definierte, die Schallabstrahlung im Nahfeld reduzierende und/oder auslöschende Auslegung der Kammern.

In Versuchen haben sich nachfolgende vorteilhafte Abmessungsbereiche der Kammer- und Rippenstruktur im Bereich der Fahrzeugtechnik ergeben, insbesondere für Fahrzeugbauteile Kraftfahrzeugbau, besonders bevorzugt von mit Dieselmotoren und/oder Hybridkonzepten ausgestatteten Nutzfahrzeugen. Der Umfang einer Kammer beträgt vorteilhaft zwischen 15 mm und 200 mm, bevorzugt zwischen 35 mm bis 95 mm und/oder die Fläche einer Kammer beträgt zwischen 30 mm und 1000 mm², bevorzugt zwischen 60 mm und 490 mm² und/oder das Volumen einer Kammer beträgt zwischen 250 mm³ und 5000 mm³, bevorzugt zwischen 400 mm² und 3000 mm³.

Auch für das Umfang-zu-Fläche-Verhältnis der Kammern des Bauteils konnten die Verhältnisse zwischen 1:1 und 1:10, bevorzugt zwischen 1:1,5 und 1:5,5 als vorteilhaft ermittelt werden.

Wenn das Bauteil ein Deckelelement eines Motors, eine Ölwanne, ein Innenverkleidungsteil und/oder ein Motoranbauteil ist und eine minimale Längserstreckung von 400 mm, vorzugsweise von 750 mm, besonders bevorzugt von 1000 mm aufweist ist wiederum ein effektives Geräuschreduktionsverhalten gegeben. Ein Deckelelement eines Motors kann beispielsweise ein Steuergehäusedeckel sein.

Ferner ist auch die Prämisse, dass die maximale Längserstreckung wenigstens der Hälfte, vorzugsweise sämtlicher erfindungsgemäßer Kammern des Bauteils 95 mm, vorzugsweise 75 mm, besonders bevorzugt 50 mm nicht überschreitet und/oder die maximale Längserstreckung wenigstens der Hälfte, vorzugsweise sämtlicher Kammern des Bauteils 3 mm, vorzugsweise 5 mm, besonders bevorzugt 10 mm nicht unterschreitet als vorteilhaftes Auslegungskriterium zu nennen.

Durch die Beachtung einzelner oder aller der oben erwähnten konkreten Abmessungsbereiche kann eine besonders effektiv wirkende Schallreduzierung bzw. Schallaufhebung im Nachfeld des Bauteils erreicht werden.

Bei der gezielten Auslegung der Rippen- und Kammerstruktur wurde erkannt, dass insbesondere drei- und fünfeckige Kammern für die erfindungsgemäße Struktur von Vorteil ist. Vorzugsweise sind zumindest die Hälfte der Kammern des Bauteils, bevorzugst zumindest ¾ der Kammern des Bauteils drei- oder fünfeckig ausgebildet. Alternativ oder zusätzlich sind zumindest eine, vorzugsweise über die Hälfte der Kammern von wenigstens 5, vorzugsweise von wenigstens 6 oder besonders bevorzugt von wenigstens 7 benachbarten Kammern umgeben.

Um die übrigen mechanischen Anforderungen des Bauteils zu erreichen, ist es vorteilhaft, zusätzlich zu der erfindungsgemäßen Rippenstruktur Versteifungsstreben an dem Bauteil anzuordnen. Diese können wenigstens teilweise auch mit der Rippenstruktur zusammenfallen. Hierbei ist zu beachten, dass die Flächen zwischen den Versteifungsstreben eine durch die erfindungsgemäße Rippenstruktur zugelassene Nachgiebigkeit aufweist. Zwar geht mit den Versteifungsstreben eine Reduktion der Nachgiebigkeit einher, jedoch ist durch entsprechende Beabstandung der Versteifungsstreben und damit einer gewissen Mindestflächengröße für die zwischen den Verstreifungsstreben befindlichen Flächen die Reduktion bzw. Auslöschung der Nahfeldgeräusche gewährleistet.

Als mechanischer Schutz der offenen Kammervolumen ist es von Vorteil, wenn die Öffnungen der Kammern zumindest bereichsweise mit einem flexiblen Element, vorzugsweise einer flexiblen Folie überspannt sind. Damit wird die Ablagerung von Staub oder von sonstigem Schmutz innerhalb der Kammern verhindert. Die unkontrollierte Ablagerung von Schmutz, Staub oder sonstigen Elementen innerhalb der Kammern kann deren Nachgiebigkeit und damit den Geräuschreduktions-/- auslöschungseffekt beeinflussen.

Gemäß einer weiteren Ausgestaltung der Erfindung ist das Bauteil im Endmontagezustand an einem weiteren Bauelement angeordnet wobei durch das Bauteil ein Hohlraum des Bauelementes zumindest bereichsweise abgedeckt wird und die Rippenstruktur auf der im Endmontagezustand des Bauteils auf der dem Hohlraum abgewandten Seite angeordnet ist. In diesem Fall können die Rippen und/oder die Versteifungsrippen als Opferrippen gegen von außen mechanisch einwirkender Elemente (z.B. Steinschlag) dienen und damit die das Bauteil schützen.

Das erfindungsgemäße Bauteil ist vorzugsweise zumindest bereichsweise aus einem Kunststoff und/oder einem Verbundwerkstoff gebildet. Zum Beispiel kann das Bauteil als Gussteil, vorzugsweise als Spitzgussteil gefertigt werden, damit lässt sich die "aufwedige" Struktur der Rippen auf kostengünstige Weise umsetzen.

Die Erfindung ist anhand von Ausführungsbeispielen in den Zeichnungsfiguren näher erläutert. Diese zeigen
- Fig. 1:: eine schematische perspektivische Darstellung einer mit der erfindungsgemäßen Rippenstruktur versehen Ölwanne;
- Fig. 2:: eine schematische perspektivische Darstellung der Ölwanne aus Figur 1 von schräg unten;
- Fig. 3:: eine schematische Unteransicht der Ölwanne aus Figur 1;
- Fig. 4:: eine Detailschnittdarstellung gemäß IV-IV aus Figur 3;
- Fig. 5:: eine Detaildarstellung gemäß Detail A aus Figur 3;
- Fig. 6:: eine schematische Schnittdarstellung gemäß Schnittlinie VI-VI aus Figur 5;
- Fig. 7:: eine Detaildarstellung gemäß Detail C aus Figur 4
- Fig. 8: eine schematische perspektivische Darstellung eines mit der erfindungsgemäßen Rippenstruktur versehenen Steuergehäusedeckels;

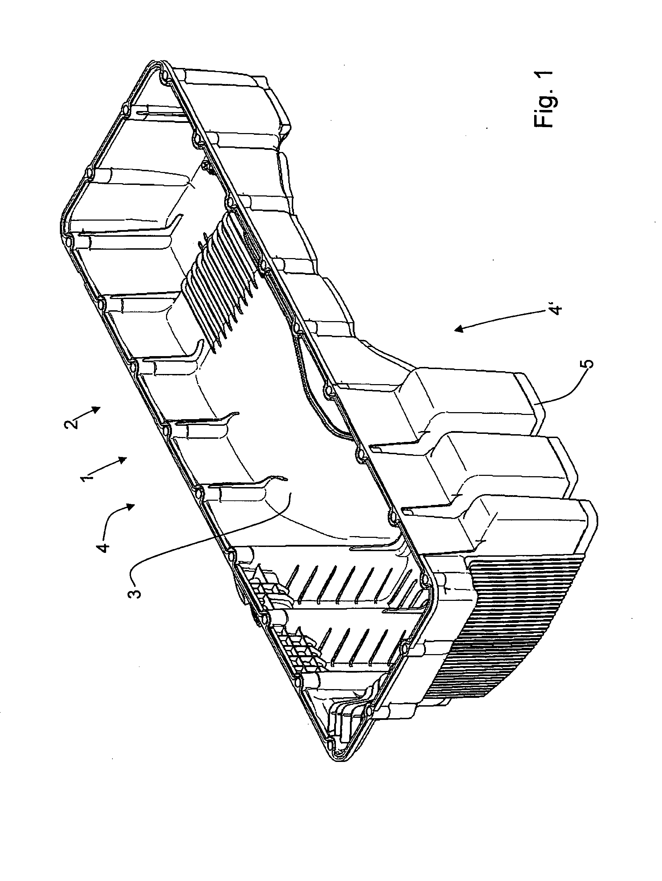

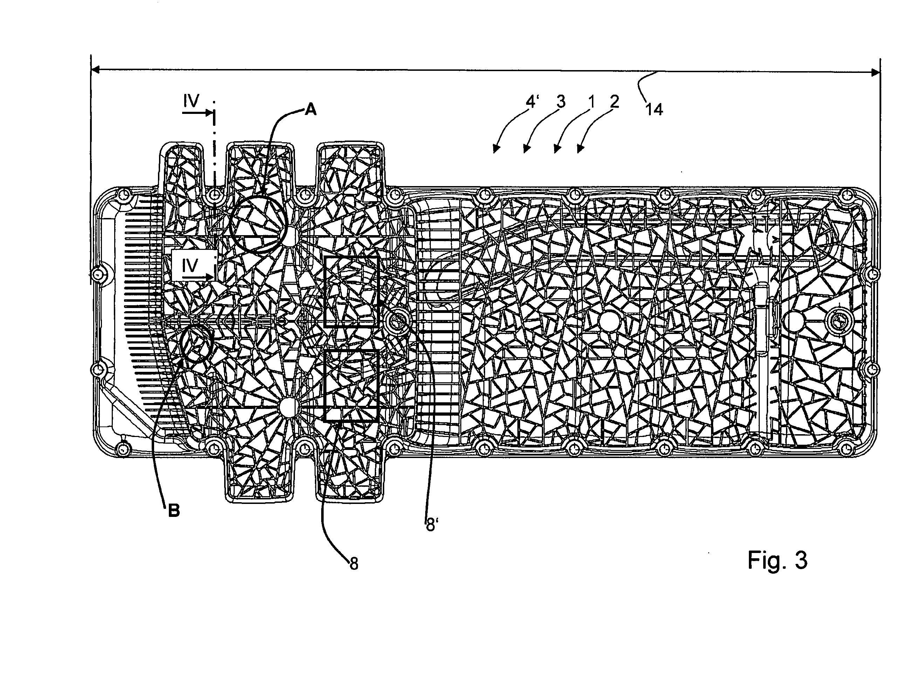

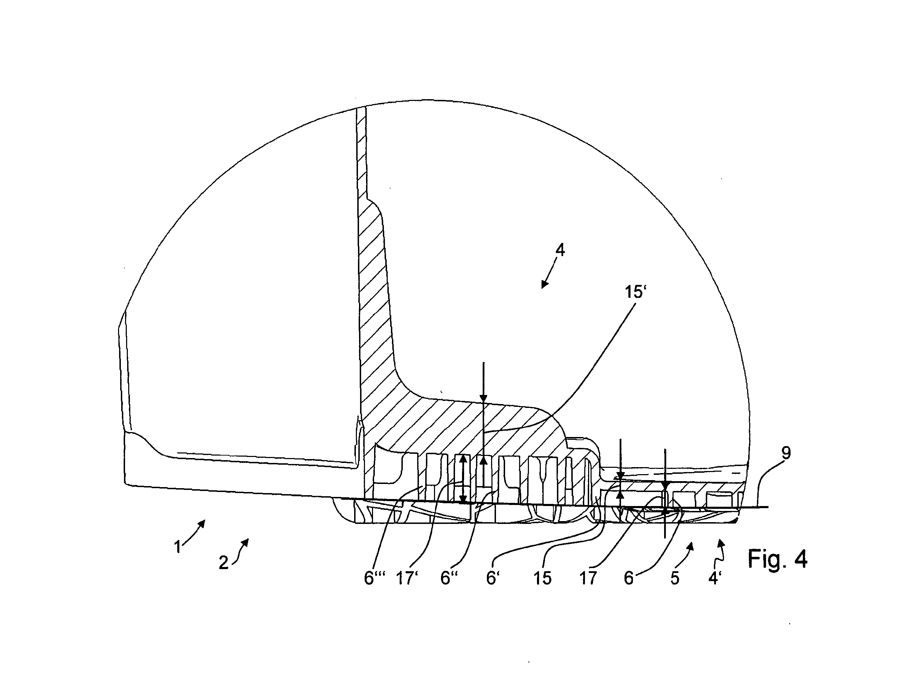

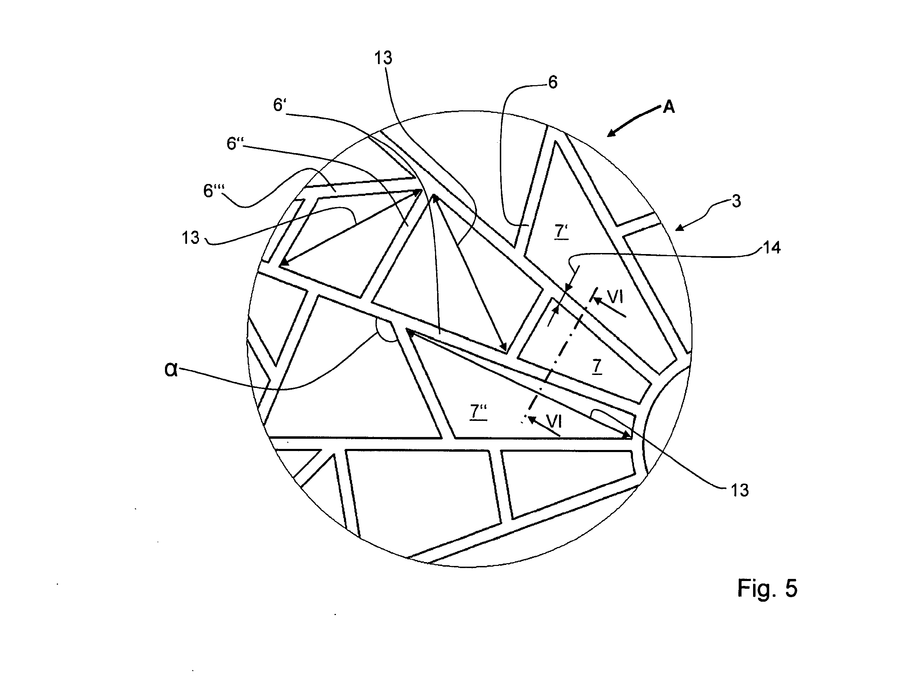

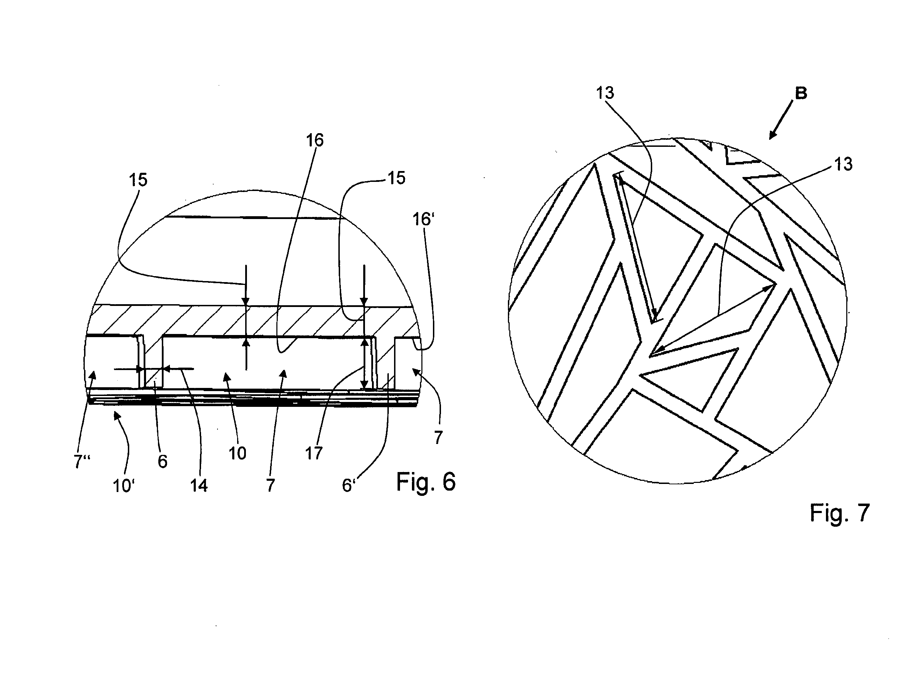

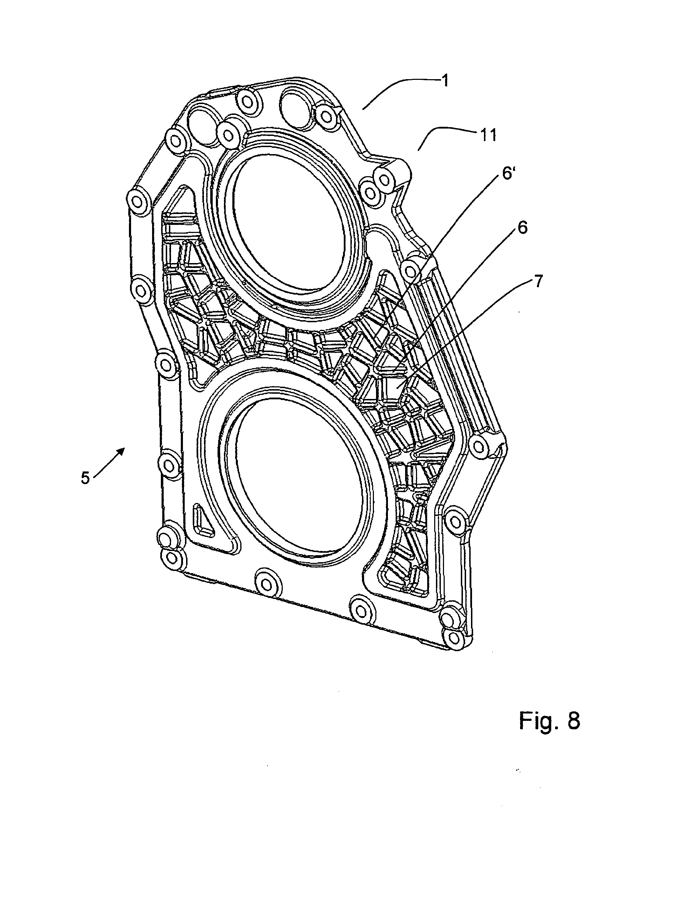

Als beispielhafte Ausführungen des mit den erfindungsgemäßen Rippen versehenen Bauteils ist dieses in den Figuren 1 bis 7 als Ölwanne 2 und in der Figur 8 als Steuergehäusedeckel 11 ausgebildet.

Das in Figur 1 dargestellte akustisch bedämpfte Bauteil 1 in Form einer Ölwanne 2 umfasst einen flächigen Grundkörper 3 der mit seiner Oberseite 4 motorseitig ausgerichtet auf der Unterseite 4' mit einer nach unten weisenden Rippenstruktur 5 versehen ist. Die Rippen 6, 6', 6", 6'" der Rippenstruktur 5 verlaufen derart, dass sie unregelmäßige Kammern 7, 7', 7" auf dem Grundkörper 3 bilden. Die Rippen 6, 6', 6" sind derart relativ zu dem Grundkörper 3 angeordnet und dimensioniert, dass nur eine geringfügige Versteifung des Grundkörpers 3 einhergeht, so dass das Bauteil 1 trotz der Rippen 6, 6', 6", 6'" eine Eigenfrequenz von 200 bis 1000 Hz aufweist.

Die Unregelmäßigkeit der Kammern 7, 7', 7" führt dazu, dass der aus den Kammern 7, 7', 7" resultierende Luftschall sich im Nahfeld gegenseitig reduziert und/oder auslöscht. Wenn die Ölwanne 2 eine transiente Erregung erfährt, so wird die Antwortreaktion wenigstens zweier Teilflächen 8, 8' der mit den Kammern 7, 7', 7" versehenen Oberfläche der Ölwanne 2 eine Korrelation von 0,50 bis 0,85, vorzugsweise 0,60 bis 0,70 aufweisen. In der dargestellten Ausführungsform sind die überwiegende Anzahl (> 80 %) der Kammern 7, 7', 7" der Ölwanne 2 derart unregelmäßig ausgebildet.

In Zeichnungsfigur 3 ist die Anordnung der Rippen 6, 6', 6" 6'" und die unregelmäßige Struktur der Kammern 7, 7', 7" über nahezu die gesamte Unterseite 4' der Ölwanne 2 erkennbar. Die unregelmäßigen Kammern 7, 7', 7" umfassen hierbei über die Hälfte der Kammern 7, 7', 7" der Ölwanne 2. Innerhalb einer Teilfläche 8, 8' der mit Kammern 7, 7', 7" versehenen Fläche der Ölwanne 2 ist keine in Geometrie und/oder Dimensionierung gleiche Kammer 7, 7', 7" angeordnet. Eine Teilfläche kann eine Größe von mindestens 5 %, mindestens 25 % oder mindestens 80 % der Gesamtfläche der Bauteils 1 umfassen.

Die Kammern 7, 7', 7" sind derart unterschiedlich in Geometrie und/oder Dimensionierung gestaltet, dass keine zu einer ersten Kammer 7 benachbarte Kammer 7', 7" durch Skalierung, Drehung und/oder Spiegelung auf die erste Kammer 7 abbildbar ist.

Die Rippen 6, 6', 6", 6'" verlaufen geradlinig wobei die Rippen 6, 6', 6", 6'" einer Kammer 7, 7', 7" einen Winkel α von kleiner 180° einschließen. Ferner sind die Rippen 6, 6', 6", 6'" zumindest teilweise derart ausgebildet, dass diese einen Wandabschnitt für mehrere Kammern 7, 7', 7" bilden und die Rippe 6, 6', 6", 6'" einen geradlinigen Verlauf über mehrere Kammern 7, 7', 7" hinweg aufweist. Überwiegend (wenigstens über die Hälfte, vorzugsweise wenigstens 85 %) sind die Kammern 7, 7', 7" als Drei-, Vier- oder Fünfecke ausgebildet und dabei von wenigstens vier oder vorzugsweise von wenigstens fünf benachbarten Kammern 7, 7', 7" umgeben.

Neben den Rippen 6, 6', 6", 6"' der Rippenstruktur 5 sind zur Festigkeitssteigerung der Ölwanne 2 Versteifungsstreben (nicht dargestellt) auf der Unterseite 4 der Ölwanne 2 angeordnet. Die Versteifungsstreben weisen dabei eine höhere Wandstärke als die Rippen 6, 6', 6", 6'" auf und wirken auf die Ölwanne 2 versteifend. Jedoch sind die Versteifungsstreben derart voneinander beabstandet, dass die Flächen zwischen den Versteifungsstreben eine ausreichende Elastizität aufweisen um die erfindungsgemäße Schallabstrahlung bzw. Schallreduzierung an den Kammern 7, 7', 7" zu erreichen. Auch können die Versteifungsrippen teilweise mit den Rippen 6, 6', 6", 6"' der Rippenstruktur 5 zusammenfallen.

Um ein ausreichend elastisches Verhalten zur Nahfeldschallreduktion zu gewährleisten ist die Ausgestaltung der Rippen 6, 6', 6", 6'" relativ zu dem Grundkörper 3 von Bedeutung. Hierbei hat es sich als vorteilhaft bewährt, wenn die Rippenbreite 14 einer Kammer 7, 7', 7" kleiner als die Kammerbodendicke 15 dieser Kammer 7, 7', 7" ist. Insbesondere ein Rippenbreite-14-zu-Kammerbodendicke-15-Verhältnis von 1,0:1,2 bis 1:20, besonders bevorzugt von 1,0:1,8 zu 1:3 hat sich als vorteilhaft erwiesen.

Die Rippen 6, 6', 6" sind an der Außenseite 4' der Ölwanne 2 angeordnet. Im Endmontagezustand schließt die Ölwanne 2 das Kurbelgehäuse (nicht dargestellt) unterseitig ab so dass die Rippen 6, 6', 6" vom Kurbelgehäuse wegweisend und damit zur Umgebung hin freiliegend angeordnet sind. Um eine Ablagerung von Staub und Schmutz in den zur Umgebung hin freiliegenden Kammern 7, 7', 7" zu verhindern ist es vorteilhaft, die Öffnungen 10, 10' der Kammern 7, 7', 7" mit einem flexiblen Element (nicht dargestellt), vorzugsweise einer flexiblen Folie zu verschließen.

Die Längserstreckung 12 der Ölwanne 2 beträgt knapp über 1150 mm und liegt damit über dem vorteilhaften Mindestwert von wenigstens 400 mm.

Die maximale Längserstreckung 13, 13', 13" der Kammern 7, 7', 7" des Bauteils 1 beträgt maximal 95 mm und minimal 5 mm. Innerhalb dieses Wertebereichs für die maximale Längserstreckung 13, 13', 13" der Kammern 7, 7', 7" ist die Schallreduktion im Nahbereich unter Berücksichtigung der Wandstärke günstig. Vorzugsweise ist dieser Wertebereich auf sämtliche Kammern 7, 7', 7" des Bauteils 1 zutreffend. Eine weitere Steigerung der erfindungsgemäßen Nahfeldschallreduktion ist durch den engeren Wertebereich für die maximale Längserstreckung 13, 13', 13" von maximal 50 mm und minimal 10 mm gegeben. Die maximale Längserstreckung 13, 13', 13" ist hierbei die maximale Länge innerhalb einer Kammer 7, 7',7".

Das Umfang-zu-Fläche-Verhältnis der Kammern 7, 7', 7" des Bauteils 1 liegt im Wertebereich von 1,0:1,5 und 1,0:5,5.

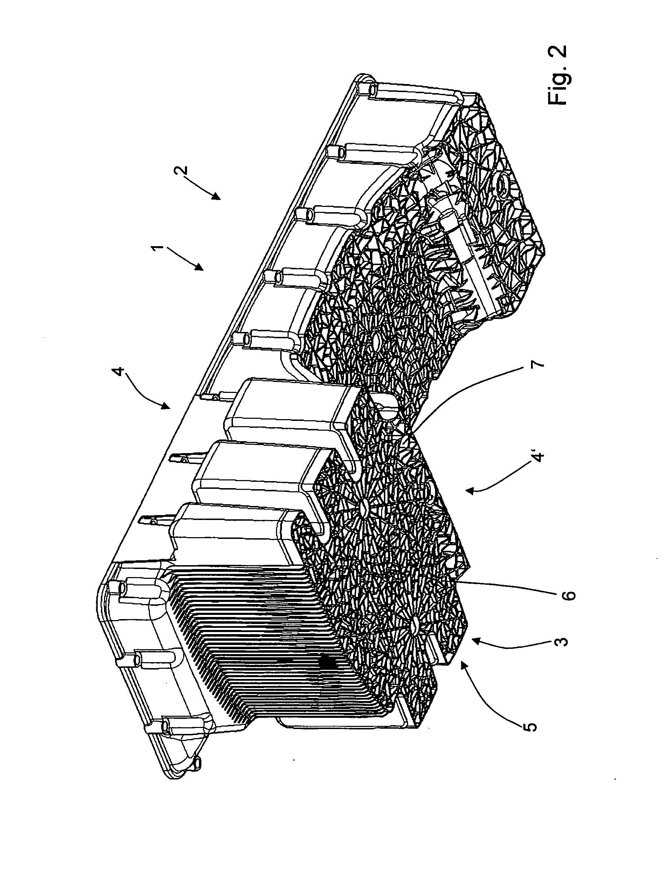

Aus der den Figuren 2, 4 und 6 ist erkennbar, dass die freien Enden der Öffnungen 10, 10' der Rippenstruktur 5 benachbarter oder vorzugsweise einer überwiegenden Anzahle (> 85 %) an Kammern 7, 7', 7" in einer Ebene und/oder dass die Bodenbereiche 16, 16' benachbarter oder vorzugsweise einer überwiegenden Anzahle (> 85 %) an Kammern 7, 7', 7" in einer weiteren, zur ersten Ebene vorzugsweise zumindest bereichsweise parallelen zweiten Ebene liegen.

Die Rippenhöhe 17 plus Kammerbodendicke 15 ist im Verhältnis zu der Kammerbodendicke 15 kleiner 4:1, vorzugsweise kleiner oder gleich 3,5:1,0 besonders bevorzugt kleiner oder gleich 3:1 ist. Als Kammerbodendicke 15 kann bspw. die Materialstärke des Grundkörpers 3 ohne Rippen 6, 6', 6" herangezogen werden.

In Zeichnungsfigur 4 sind Rippen 6, 6', 6", 6"' mit unterschiedlichen Rippenhöhen 17, 17' dargestellt. Die freien Enden der Rippen 6, 6', 6", 6'" liegen jedoch in einer Ebene oder zumindest in einem Ebenenbereich, so dass die über die freien Enden er Rippen 6, 6', 6", 6"' beschriebene Konturlinie 9 einen im wesentlichen stetigen Verlauf aufweist. Auch ist erkennbar, dass die Rippen mit der höheren Rippenhöhe 17' auch eine stärkere Kammerbodendicke 15' aufweisen als die zu der Rippenhöhe 17 korrespondierende Kammerbodendicke 15.

Figur 8 zeigt einen Steuergehäusedeckel 11 der mit einer erfindungsgemäßen Rippenstruktur 5 versehen ist. Hieraus ist erkennbar, dass die Rippenstruktur 5 sich weiteren Konstruktiven Begebenheiten unterordnet.

### Bezugszeichenliste

- α: Winkel zwischen 6 und 6'
- 1: Bauteil
- 2: Ölwanne
- 3: Grundkörper
- 4, 4': Seite v. 3
- 5: Rippenstruktur
- 6, 6', 6'', 6''': Rippe v. 5
- 7, 7', 7'': Kammer
- 8, 8': Teilfläche v. 3
- 9: Konturlinie
- 10, 10': Öffnung v. 7, 7', 7"
- 11: Steuergehäusedeckel
- 12: Längserstreckung v. 1
- 13: Längserstreckung v. 7, 7', 7"
- 14: Rippenbreite v. 6, 6', 6", 6'"
- 15, 15': Kammerbodendicke v. 7, 7', 7"
- 16: Bodenbereich v. 7, 7', 7"
- 17, 17': Rippenhöhe v. 6, 6', 6", 6'"

## Patentansprüche

1. Akustisch bedämpftes Bauteil vorzugsweise für ein Fahrzeug, einen Motor, ein Getriebe oder eine Fahrzeugverkleidung umfassend einen flächigen Grundkörper (3) der auf zumindest einer Seite (4, 4') wenigstens bereichsweise mit einer Rippenstruktur (5) versehen ist wobei die Rippen (6, 6', 6", 6"') der Rippenstruktur (5) Kammern (7, 7', 7") bilden und die Kammern (7, 7', 7") auf zumindest einem Bereich des Bauteils (1) unregelmäßig angeordnet sind,
**dadurch gekennzeichnet, dass**
das Bauteil (1) eine Eigenfrequenz von 200 -1000 Hz aufweist und die Kammern (7, 7', 7") derart unregelmäßig ausgebildet sind, dass zumindest bereichsweise Kammern (7, 7', 7") des Bauteils (1) gegenüber der an diesen benachbarten Kammern (7, 7', 7") eine derart unterschiedliche Dimensionierung und/oder Geometrie aufweisen, dass ausgehend von den Kammern (7, 7', 7") abgestrahlter Luftschall im Nahfeld gegenseitig reduzierbar und/oder auslöschbar ist wobei eine Antwort auf eine transiente Erregung wenigstens zweier Teilflächen (8, 8') der mit den Kammern (7, 7', 7") versehenen Oberfläche des Bauteils (1) eine Korrelation von 0,50 bis 0,85, vorzugsweise 0,60 bis 0,70 aufweist.

2. Akustisch bedämpftes Bauteil nach Anspruch 1 oder 2, **dadurch gekennzeichnet, dass** die Rippenbreite (14) einer Kammer (7) kleiner als die Kammerbodendicke (15) dieser Kammer (7) ist, vorzugsweise entspricht die Rippenbreite (14) zu der Kammerbodendicke (15) dem Verhältnis 1,0:1,2 bis 1:20, besonders bevorzugt dem Verhältnis 1:1,8 bis 1:3.

3. Akustisch bedämpftes Bauteil nach einem der vorhergehenden Ansprüche, **dadurch gekennzeichnet, dass** sämtliche Rippen (6, 6', 6", 6"') einer Kammern (7, 7', 7") geradlinig verlaufen und vorzugsweise dass sämtliche Rippen (6, 6', 6", 6"') zu angrenzenden Rippen (6, 6', 6", 6"') einer Kammer (7, 7', 7") einen Winkel α kleiner gleich 180° einschließen.

4. Akustisch bedämpftes Bauteil nach einem der vorhergehenden Ansprüche, **dadurch gekennzeichnet, dass** die Geometrie und/oder Dimensionierung der Kammern (7, 7', 7") derart gewählt ist, dass sich die maximale Abstrahlfrequenz der benachbarten Kammern (7, 7', 7") aufhebt und/oder reduziert.

5. Akustisch bedämpftes Bauteil nach einem der vorhergehenden Ansprüche, **dadurch gekennzeichnet, dass** das Verhältnis von Rippenhöhe (17) plus Kammerbodendicke (15) zu Kammerbodendicke (15) kleiner 4:1, vorzugsweise kleiner oder gleich 3,5:1,0, besonders bevorzugt kleiner oder gleich 3:1 beträgt.

6. Akustisch bedämpftes Bauteil nach einem der vorhergehenden Ansprüche, **dadurch gekennzeichnet, dass** der Umfang einer Kammer (7, 7', 7") zwischen 15 mm und 200 mm, bevorzugt zwischen 35 mm bis 95 mm und/oder die Fläche einer Kammer (7, 7', 7") zwischen 30 und 1000 mm², bevorzugt zwischen 60 mm und 490 mm² und/oder das Volumen einer Kammer (7, 7', 7") zwischen 250 mm³ und 5000 mm³, bevorzugt zwischen 400 mm² und 3000 mm³ beträgt.

7. Akustisch bedämpftes Bauteil nach einem der vorhergehenden Ansprüche, **dadurch gekennzeichnet, dass** das Umfang-zu-Fläche-Verhältnis der Kammern (7, 7', 7") des Bauteils (1) zwischen 1:1 und 1:10, bevorzugt zwischen 1:1,5 und 1:5,5 beträgt.

8. Akustisch bedämpftes Bauteil nach einem der vorhergehenden Ansprüche, **dadurch gekennzeichnet, dass** die maximale Längserstreckung (13, 13', 13") wenigstens der Hälfte der Kammern (7, 7', 7"), vorzugsweise sämtlicher Kammern (7, 7', 7") des Bauteils 95 mm, vorzugsweise 75 mm, besonders bevorzugt 50 mm nicht überschreitet und/oder die maximale Längserstreckung (13, 13', 13") wenigstens der Hälfte der Kammern (7, 7', 7"), vorzugsweise sämtlicher Kammern (7, 7', 7") des Bauteils (1) 5 mm, vorzugsweise 10 mm nicht unterschreitet.

9. Akustisch bedämpftes Bauteil nach einem der vorhergehenden Ansprüche, **dadurch gekennzeichnet, dass** Versteifungsstreben an dem Bauteil (1) angeordnet sind und diese vorzugsweise wenigstens teilweise mit der Rippenstruktur (5) zusammenfallen.

10. Akustisch bedämpftes Bauteil nach einem der vorhergehenden Ansprüche, **dadurch gekennzeichnet, dass** das Bauteil (1) mit wenigstens drei- und fünfeckigen Kammern (7, 7', 7") versehen ist, vorzugsweise dass zumindest die Hälfte der Kammern (7, 7', 7") des Bauteils (1), bevorzugt zumindest ¾ der Kammern (7, 7', 7") des Bauteils(1) drei-, vier- oder fünfeckig sind und/oder dass zumindest eine Kammer (7, 7', 7") von wenigstens 5, vorzugsweise von wenigstens 6 oder besonders bevorzugt von wenigstens 7 benachbarten Kammern (7, 7', 7") umgeben ist.

11. Akustisch bedämpftes Bauteil nach einem der vorhergehenden Ansprüche, **dadurch gekennzeichnet, dass** die Öffnungen (10, 10') der Kammern (7, 7', 7") zumindest bereichsweise mit einem flexiblen Element, vorzugsweise einer flexiblen Folie überspannt sind.

12. Akustisch bedämpftes Bauteil nach einem der vorhergehenden Ansprüche, **dadurch gekennzeichnet, dass** das Bauteil (1) ein Deckelelement (11) eines Motors, eine Ölwanne (2), ein Innenverkleidungsteil und/oder ein Motoranbauteil ist und vorzugsweise eine minimale Längserstreckung (12) von 400 mm, vorzugsweise von 750 mm, besonders bevorzugt von 1000 mm aufweist.

13. Akustisch bedämpftes Bauteil nach einem der vorhergehenden Ansprüche, **dadurch gekennzeichnet, dass** das Bauteil (1) im Endmontagezustand an einem weiteren Bauelement einen Hohlraum des Bauelementes abdeckt und die Rippenstruktur (5) auf der im Endmontagezustand des Bauteils (1) auf der dem Hohlraum abgewandten Seite (4) angeordnet ist.

14. Akustisch bedämpftes Bauteil nach einem der vorhergehenden Ansprüche, **dadurch gekennzeichnet, dass** wenigstens eine erste Kammer (7) derart unterschiedlich in Geometrie und/oder Dimensionierung gestaltet ist, dass keine der zu dieser Kammer (7) benachbarten Kammern (7', 7") durch Skalierung, Spiegelung und/oder Drehung auf die erste Kammer (7) erzeugbar und/oder abbildbar ist.

15. Akustisch bedämpftes Bauteil nach einem der vorhergehenden Ansprüche, **dadurch gekennzeichnet, dass** innerhalb einer Teilfläche (8, 8') der mit Kammern (7, 7', 7") versehenen Fläche des Bauteils (1) keine in Geometrie und/oder Dimensionierung gleiche Kammer (7, 7', 7") angeordnet wobei die Teilfläche (8, 8') eine Größe von mindestens 5 % der gesamten mit Kammern (7, 7', 7") versehenen Fläche des Bauteils (1), vorzugsweise eine Größe von mindestens 25 %, besonders bevorzugt eine Größe von mindestens 80 % der gesamten mit Kammern (7, 7', 7") versehenen Fläche des Bauteils (1) aufweist.

## Claims

1. An acoustically damped component preferably for a vehicle, an engine, a transmission or a vehicle trim panel, comprising a flat basic body (3) which is provided on at least one side (4, 4') at least in regions with a rib structure (5), the ribs (6, 6', 6", 6''') of the rib structure (5) forming chambers (7, 7', 7") and the chambers (7, 7', 7") being arranged irregularly on at least one region of the component (1), **characterized in that** the component (1) has a resonant frequency of from 200 to 1000 Hz and the chambers (7, 7', 7'') are configured irregularly in such a way that, at least in regions, chambers (7, 7', 7'') of the component (1) have different dimensioning and/or geometry in comparison with the chambers (7, 7', 7'') which adjoin them, such that, starting from the chambers (7, 7', 7''), emitted airborne sound can be reduced and/or eradicated mutually in the near field, a response to a transient excitation of at least two part areas (8, 8') of that surface of the component (1) which is provided with the chambers (7, 7', 7'') having a correlation of from 0.50 to 0.85, preferably of from 0.60 to 0.70.

2. The acoustically damped component according to Claim 1 or 2, **characterized in that** the rib width (14) of a chamber (7) is smaller than the chamber-bottom thickness (15) of the said chamber (7); the rib width (14) to the chamber-bottom thickness (15) preferably corresponds to the ratio from 1.0:1.2 to 1:20, particularly preferably to the ratio from 1:1.8 to 1:3.

3. The acoustically damped component according to one of the preceding claims, **characterized in that** all the ribs (6, 6', 6", 6''') of a chamber (7, 7', 7'') extend rectilinearly, and preferably **in that** all the ribs (6, 6', 6'', 6''') enclose an angle α of less than or equal to 180° with respect to adjacent ribs (6, 6', 6'', 6''') of a chamber (7, 7', 7'').

4. The acoustically damped component according to one of the preceding claims, **characterized in that** the geometry and/or dimensioning of the chambers (7, 7', 7'') is selected in such a way that the maximum emitting frequencies of the adjacent chambers (7, 7', 7") cancel one another out and/or reduce one another.

5. The acoustically damped component according to one of the preceding claims, **characterized in that** the ratio of rib height (17) plus chamber-bottom thickness (15) to chamber-bottom thickness (15) is less than 4:1, preferably less than or equal to 3.5:1.0, particularly preferably less than or equal to 3:1.

6. The acoustically damped component according to one of the preceding claims, **characterized in that** the circumference of a chamber (7, 7', 7'') is between 15 mm and 200 mm, preferably between 35 mm and 95 mm, and/or the area of a chamber (7, 7', 7'') is between 30 and 1000 mm², preferably between 60 mm² and 490 mm², and/or the volume of a chamber (7, 7', 7'') is between 250 mm³ and 5000 mm³, preferably between 400 mm³ and 3000 mm³.

7. The acoustically damped component according to one of the preceding claims, **characterized in that** the circumference-to-area ratio of the chambers (7, 7', 7'') of the component (1) is between 1:1 and 1:10, preferably between 1:1.5 and 1:5.5.

8. The acoustically damped component according to one of the preceding claims, **characterized in that** the maximum longitudinal extent (13, 13', 13") of at least half of the chambers (7, 7', 7"), preferably of all the chambers (7, 7', 7") of the component does not exceed 95 mm, preferably 75 mm, particularly preferably 50 mm, and/or the maximum longitudinal extent (13, 13', 13'') of at least half of the chambers (7, 7', 7"), preferably of all the chambers (7, 7', 7'') of the component (1) does not undershoot 5 mm, preferably 10 mm.

9. The acoustically damped component according to one of the preceding claims, **characterized in that** reinforcing struts are arranged on the component (1) and they preferably coincide at least partially with the rib structure (5).

10. The acoustically damped component according to one of the preceding claims, **characterized in that** the component (1) is provided with at least triangular and pentagonal chambers (7, 7', 7''), preferably **in that** at least half of the chambers (7, 7', 7'') of the component (1), preferably at least three quarters of the chambers (7, 7', 7'') of the component (1) are triangular, quadrangular or pentagonal, and/or **in that** at least one chamber (7, 7', 7") is surrounded by at least 5, preferably by at least 6 or particularly preferably by at least 7 adjacent chambers (7, 7', 7'').

11. The acoustically damped component according to one of the preceding claims, **characterized in that** the openings (10, 10') of the chambers (7, 7', 7") are spanned at least in regions by a flexible element, preferably a flexible film.

12. The acoustically damped component according to one of the preceding claims, **characterized in that** the component (1) is a cover element (11) of an engine, an oil sump (2), an interior trim panel and/or an engine attachment part, and preferably has a minimum longitudinal extent (12) of 400 mm, preferably of 750 mm, particularly preferably of 1000 mm.

13. The acoustically damped component according to one of the preceding claims, **characterized in that**, in the finally assembled state on a further structural element, the component (1) covers a cavity of the structural element, and the rib structure (5) is arranged on the side (4) which faces away from the cavity in the finally assembled state of the component (1).

14. The acoustically damped component according to one of the preceding claims, **characterized in that** at least one first chamber (7) is designed differently in terms of geometry and/or dimensioning in such a way that none of the chambers (7', 7'') which are adjacent to the said chamber (7) can be produced and/or reproduced by scaling, inversion and/or rotation of the first chamber (7).

15. The acoustically damped component according to one of the preceding claims, **characterized in that** no chamber (7, 7', 7") which is identical in terms of geometry and/or dimensioning is arranged within a part area (8, 8') of that area of the component (1) which is provided with chambers (7, 7', 7"), the part area (8, 8') having a size of at least 5% of the entire area of the component (1) which is provided with chambers (7, 7', 7"), preferably has a size of at least 25%, particularly preferably has a size of at least 80% of the entire area of the component (1) which is provided with chambers (7, 7', 7'').

## Revendications

1. Partie structurale avec insonorisation, de préférence pour un véhicule, un moteur, une transmission ou un habillage de véhicule comportant un corps de base plat (3) qui est pourvu, sur au moins un côté (4, 4'), au moins dans certaines régions, d'une structure nervurée (5), les nervures (6, 6' , 6'', 6''') de la structure nervurée (5) formant des chambres (7, 7', 7'') et les chambres (7, 7', 7'') étant disposées de manière irrégulière sur au moins une région de la partie structurale (1),
**caractérisée en ce que**
la partie structurale (1) présente une fréquence propre de 200 à 1000 Hz et les chambres (7, 7', 7'') sont réalisées de manière irrégulière de telle sorte qu'au moins dans certaines régions, des chambres (7, 7', 7'') de la partie structurale (1) présentent, par rapport aux chambres (7, 7', 7'') adjacentes à celles-ci, un dimensionnement et/ou une géométrie différente(s), de telle sorte qu'à partir des chambres (7, 7', 7''), le bruit aérien émis puisse être réduit et/ou éliminé réciproquement dans le champ proche, une réponse à une excitation transitoire d'au moins deux surfaces partielles (8, 8') de la surface de la partie structurale (1) pourvue des chambres (7, 7', 7'') présentant une corrélation de 0,50 à 0,85, de préférence de 0,60 à 0,70.

2. Partie structurale avec insonorisation selon la revendication 1 ou 2, **caractérisée en ce que** la largeur de nervure (14) d'une chambre (7) est inférieure à l'épaisseur de fond de chambre (15) de cette chambre (7), de préférence la largeur de nervure (14) par rapport à l'épaisseur de fond de chambre (15) correspond au rapport 1,0:1,2 à 1:20, de manière particulièrement préférée au rapport 1:1,8 à 1:3.

3. Partie structurale avec insonorisation selon l'une quelconque des revendications précédentes, **caractérisée en ce que** toutes les nervures (6, 6', 6'', 6''') d'une chambre (7, 7', 7'') s'étendent de manière rectiligne, et de préférence toutes les nervures (6, 6', 6'', 6''') forment avec des nervures adjacentes (6, 6', 6'', 6''') d'une chambre (7, 7', 7'') un angle α inférieur ou égal à 180°.

4. Partie structurale avec insonorisation selon l'une quelconque des revendications précédentes, **caractérisée en ce que** la géométrie et/ou le dimensionnement des chambres (7, 7', 7'') est/sont sélectionné(e)(s) de telle sorte que la fréquence d'émission maximale des chambres adjacentes (7, 7', 7'') s'annule et/ou se réduise.

5. Partie structurale avec insonorisation selon l'une quelconque des revendications précédentes, **caractérisée en ce que** le rapport de la hauteur de nervure (17) plus l'épaisseur de fond de chambre (15) par rapport à l'épaisseur de fond de chambre (15) est inférieur à 4:1, de préférence inférieur ou égal à 3,5:1,0, de manière particulièrement préférée inférieur ou égal à 3:1.

6. Partie structurale avec insonorisation selon l'une quelconque des revendications précédentes, **caractérisée en ce que** la circonférence d'une chambre (7, 7', 7'') vaut entre 15 mm et 200 mm, de préférence entre 35 mm et 95 mm et/ou la surface d'une chambre (7, 7', 7'') vaut entre 30 et 1000 mm², de préférence entre 60 mm² et 490 mm² et/ou le volume d'une chambre (7, 7', 7'') vaut entre 250 mm³ et 5000 mm³, de préférence entre 400 mm³ et 3000 mm³.

7. Partie structurale avec insonorisation selon l'une quelconque des revendications précédentes, **caractérisée en ce que** le rapport de la circonférence à la surface des chambres (7, 7', 7'') de la partie structurale (1) vaut entre 1:1 et 1:10, de préférence entre 1:1,5 et 1:5,5.

8. Partie structurale avec insonorisation selon l'une quelconque des revendications précédentes, **caractérisée en ce que** l'étendue longitudinale maximale (13, 13', 13'') d'au moins la moitié des chambres (7, 7', 7''), de préférence de toutes les chambres (7, 7', 7''), de la partie structurale ne dépasse pas 95 mm, de préférence 75 mm, de manière particulièrement préférée 50 mm et/ou l'étendue longitudinale maximale (13, 13', 13'') d'au moins la moitié des chambres (7, 7', 7''), de préférence de toutes les chambres (7, 7', 7''), de la partie structurale (1) n'est pas inférieure à 5 mm, de préférence 10 mm.

9. Partie structurale avec insonorisation selon l'une quelconque des revendications précédentes, **caractérisée en ce que** des entretoises de renfort sont disposées sur la partie structurale (1) et celles-ci correspondent de préférence au moins partiellement à la structure nervurée (5).

10. Partie structurale avec insonorisation selon l'une quelconque des revendications précédentes, **caractérisée en ce que** la partie structurale (1) est pourvue de chambres (7, 7', 7'') au moins triangulaires et pentagonales, de préférence **en ce qu'**au moins la moitié des chambres (7, 7', 7'') de la partie structurale (1), de manière préférée au moins ¾ des chambres (7, 7', 7'') de la partie structurale (1), sont triangulaires, quadrangulaires ou pentagonales et/ou **en ce qu'**au moins une chambre (7, 7', 7'') est entourée par au moins 5, de préférence par au moins 6, ou de manière particulièrement préférée par au moins 7, chambres adjacentes (7, 7', 7'').

11. Partie structurale avec insonorisation selon l'une quelconque des revendications précédentes, **caractérisée en ce que** les ouvertures (10, 10') des chambres (7, 7', 7'') sont recouvertes au moins dans certaines régions par un élément flexible, de préférence une feuille flexible.

12. Partie structurale avec insonorisation selon l'une quelconque des revendications précédentes, **caractérisée en ce que** la partie structurale (1) est un élément de couvercle (11) d'un moteur, d'un carter d'huile (2), d'une partie d'habillage interne et/ou d'une pièce rapportée de moteur, et présente de préférence une étendue longitudinale minimale (12) de 400 mm, de préférence de 750 mm, de manière particulièrement préférée de 1000 mm.

13. Partie structurale avec insonorisation selon l'une quelconque des revendications précédentes, **caractérisée en ce que**, à l'état de montage final sur un élément structural supplémentaire, la partie structurale (1) recouvre un cavité de l'élément structural et la structure nervurée (5) est disposée sur le côté (4) opposé à la cavité à l'état de montage final de la partie structurale (1).

14. Partie structurale avec insonorisation selon l'une quelconque des revendications précédentes, **caractérisée en ce qu'**au moins une première chambre (7) est configurée différemment en termes de géométrie et/ou de dimensionnement, de telle sorte qu'aucune des chambres (7', 7'') adjacentes à cette chambre (7) ne puisse être produite et/ou reproduite par changement d'échelle, réflexion et/ou rotation.

15. Partie structurale avec insonorisation selon l'une quelconque des revendications précédentes, **caractérisée en ce qu'** aucune chambre (7, 7', 7'') identique en termes de géométrie et/ou de dimensionnement n'est disposée à l'intérieur d'une surface partielle (8, 8') de la surface, pourvue de chambres (7, 7', 7''), de la partie structurale (1), la surface partielle (8, 8') présentant une taille d'au moins 5 % de la surface totale, pourvue de chambres (7, 7', 7''), de la partie structurale (1), de préférence une taille d'au moins 25 %, de manière particulièrement préférée une taille d'au moins 80 % de la surface totale, pourvue de chambres (7, 7', 7''), de la partie structurale (1).
